# EUROPEAN PATENT SPECIFICATION

(11) **EP 1 904 684 B1**
(45) Date of publication and mention of the grant of the patent: **06.01.2010**
(21) Application number: 06726855.7
(22) Date of filing: 21.04.2006
(51) Int. Cl.: E01C 13/06, E04F 15/02

(54) **DECKING**
BODENBELAG
COUVERTURE

(30) Priority: 25.04.2005 GB 0508281
(43) Date of publication of application: 02.04.2008
(73) Proprietor: Butcher, Ian Clive, 36 Udney Park Road Teddington TW11 9BG (GB)
(72) Inventor: Butcher, Ian Clive, 36 Udney Park Road Teddington TW11 9BG (GB)
(74) Representative: Fry, David John
(86) International application number: PCT/GB2006/001465
(87) International publication number: WO 2006/114586

(56) References cited:
- WO-A-90/10112
- DE-A1- 19 733 286
- GB-A- 2 339 437
- PATENT ABSTRACTS OF JAPAN vol. 1996, no. 09, 30 September 1996 (1996-09-30) & JP 08 125310 A (MATSUSHITA ELECTRIC WORKS LTD), 17 May 1996 (1996-05-17)
- PATENT ABSTRACTS OF JAPAN vol. 1998, no. 06, 30 April 1998 (1998-04-30) & JP 10 037121 A (DIATEX CO LTD), 10 February 1998 (1998-02-10)

## Description

The present invention relates to decking.

More particularly (but not exclusively), it relates to decking suitable for outdoor use.

Traditional decking is in the form of elongate planks that are normally laid to form a planar surface. Typically decking is used for gardens, patios or for other exposed areas.

Decking can be laid at ground level over a flat surface, but is often also in the form of a raised platform upon a frame. The frame is typically in the form of an interconnected arrangement of wooden joists and posts. The posts may be provided with concrete foundations for increased stability. The joists provide supports upon which decking planks can be laid and secured in place. Usually decking planks are secured in place with galvanised nails or screws. However, any appropriate means of fixing the decking in place can be used, including the use of adhesive, staples, fixing brackets, tacks, carpentry joints, dowels, etc.

Decking provides a convenient and low maintenance alternative to grass. It also has the advantage of providing a relatively rigid level surface. Thus, for example, it can be used to support objects such as garden furniture, without the risk of the objects sinking into the ground, or becoming soiled, etc.

Decking is formed of hard-wearing wood that lasts for many years in an exterior environment. Both hard woods and soft woods can be used but soft woods, such as pine, are more commonly used because they are generally cheaper and lighter. If soft woods are used they will usually be pressure-treated and/or treated with preservative.

Decking has been used in gardens and other external environments for very many years. Over recent decades decking has become increasingly popular. In part this is due to the popularity of gardening and DIY television programmes. In part it is also due to the widespread and availability of low cost decking planks and decking kits in many DIY centres. A further reason is that many people have hectic lifestyles and are attracted by the convenience of a low maintenance product such as decking.

Although decking has numerous advantages over lawns, it can appear bland, especially if used to cover large areas, or to cover a large proportion of a small area. The bland appearance can be alleviated to some degree by providing the decking with decorative features. For example, decking can be provided with decorative borders, it can be machined to provide grooves, etc. However the decking can still appear artificial and harsh in appearance, particularly against a backdrop of a lawn, or against a planted area.

It is therefore common practice for plants in containers to be placed on the decking in order to try to "soften" the overall appearance. However in order for this to be effective it is often necessary to use a large number of plants in containers. This can be expensive and may even cost more than the decking itself.

Furthermore the plants require maintenance such as weeding, watering, re-potting, pruning, treating for diseases etc. Many plants will also shed foliage or other debris onto the decking and thus it is necessary to periodically clean or brush the decking. In some cases plant debris or spillages from plant feed, etc., may stain the decking, leading to the need for regular cleaning.

A further problem with standard decking is that it can be very slippery when wet, even if provided with pre-cut grooves in its upper surface as an aid to traction. Standard decking can be particularly dangerous in icy conditions. Ice may accumulate in grooves of the decking and may not be easily visible. The decking is also prone to become covered with algae or moulds as it ages. This can further increase the risk of accidental slipping.

Slipping is a particular risk for the elderly. This is a significant problem because decking is very popular with elderly people as a means of reducing garden maintenance.

It will be appreciated from the foregoing discussion that although standard decking has been used for very many years and has various advantages, there are various long-standing problems associated with the use of decking.

The present invention seeks to address or at least to alleviate one or more of these problems.

According to the present invention there is provided decking comprising artificial grass and a rigid support for the artificial grass; **characterised in that** the material used for the rigid support is wood, comprises wood, or has the appearance of wood, and that it provides at least one exposed region at the upper surface of the decking.

The exposed region of the material used for the support is preferably adjacent to the artificial grass. Desirably it is the form of at least one elongate strip. More desirably, there are at least two such elongate strips of exposed material on the upper surface of a piece of decking; said strips being substantially parallel, with artificial grass being located between them. These strips are preferably each at least 3 mm wide. More preferably they are at least 5 mm wide, or at least 10 mm wide (e.g. about 15 mm wide).

There may be a plurality of strips extending around the artificial grass. Thus, for example, there may be four strips in the form of a rectangular or square border when viewed from above.

The regions of artificial grass that are separated by exposed parallel strips of support material used appear as neatly mown parallel strips of lawn, although no mowing is of course necessary.

Desirably the majority of the upper surface of a piece of decking is covered with the artificial grass. More desirably, there is at least 60%, at least 70% coverage or at least 80% coverage (by area). However the coverage should not be so extensive that only the artificial grass can be seen when the decking is laid.

Decking of the present invention is preferably in the form of one or more elongate planks.

Desirably the planks are joined together and provided as pre-assembled units, although this is not essential. (Planks may be sold individually or in kits comprising a predetermined number of planks.)

One example of a pre-assembled unit of the present invention is a plurality of planks comprising artificial grass, where the planks are fixed to a base. The base may itself comprise a plurality of planks (sometimes known as rails). These can be standard planks and will not normally include artificial grass.

Alternatively, the base may be a single piece of material (preferably wood) that is appropriately shaped. For example, a square or rectangular sheet of wood may be used

The planks with artificial grass can be secured to the base by any appropriate means. Typically rust resistant nails, screws or staples will be used, but any means of fixing can be used, including adhesive, etc. The planks can be placed slightly apart when joined to the base and this can be advantageous in providing small gaps through which rainwater can run.

It is even possible to dispense with a base and simply join planks side by side to provide pre-assembled units. This may be done using connectors (e.g. T- shaped connectors, such as those disclosed in US 2002/021064), interlocking tongue and groove arrangements, click-fit systems, adhesives, etc.

However it is preferred that the decking planks are attached to a base, since this provides a relatively high degree of rigidity and stability.

The pre-assembled units can be of any desired shape, but preferably have a generally polygonal shape when viewed from above. More preferably, they are generally square, or are generally rectangular in outline.

In practice, it is envisaged that several pre-assembled units will usually be laid down adjacent one another to form a decking area (although single units can be used for decking areas if they are sufficiently large and/or if the area to be covered with decking is sufficiently small).

The units can be laid with decking planks aligned in the same direction, or can be laid with the decking planks in different directions to give a more varied appearance. For example, adjacent units may have planks at right angles to one another. This can provide a checker-board like appearance.

Although it is preferred that the decking is in the form of planks, or of units comprising planks, this is not essential. For example the decking may be in the form of tiles. The tiles may be generally polygonal in shape and have central regions of artificial grass. Regular polygons (e.g. squares or regular hexagons) are preferred forms of tile, but many shapes are known to those skilled in the art.

The decking (in whatever form) can be laid on a frame or on any substantially level surface. For example, it may be laid on an existing patio area or on a prepared flat bed.

The support material for the artificial grass rigid support is preferably wood. The wood may be pressure treated and/or treated with a preservative. Any appropriate wood can be used, including hardwoods and softwoods. A preferred wood is a pine (e.g. Swedish redwood, pine) but many other alternatives are possible, as is well known in the art of decking. Wood certified as being from a reliable sustained source is preferred.

As an alternative to wood, other rigid materials can be used that comprise wood or have the general appearance of wood (e.g. via painting or staining). They should be rigid enough to be able to provide a stable platform.

Such materials include laminates. They also include composite materials comprising wood particles or chips and a bonding agent, etc. The materials should be suitable for external use. They may be treated with a preservative if desired. An exterior grade lacquer or varnish (e.g. yacht varnish) may also be used, but this is not usually preferred.

It is also possible to use coloured plastics materials, or other synthetic materials (e.g. fibreglass) for the support material, if modified to have the appearance of wood, although this is less preferred.

Stone or metal may even be used, if modified to have the appearance of wood, but again this is not particularly preferred.

Whatever the nature of the support material, it should be sufficiently rigid to provide a stable platform that (when laid down on a decking sub-frame) will support an adult of average weight. A limited degree of flexing is of course allowable, as can occur with wood, but the material should not deform to a major degree when in use. Thus, for example, carpeting or flexible matting would not normally be used for the support.

The support material is therefore very different in nature from Astroturf^{™} material or from similar materials.

Indeed it is notable that Astroturf^{™} has been known since the 1960s and Monsanto's US patent for this product (US Patent No 3,332,828, entitled "Monofilament Ribbon Pile Product") was published in 1967. Astroturf^{™} and similar materials have been used very extensively since then in very many countries, as has decking. However during this very long period of four decades there was no teaching or suggestion at all of combining the two materials in the manner of the present invention.

It is true that various composite materials are known and may sometimes be referred to as decking. However all are very different from the decking of the present invention, as can be illustrated by the following examples.

EP 0217989 A1 discloses a non-skid panel. The panel comprises wood that is coated with epoxy resin. There is an inner and outer layer of resin, with the outer later having grit particles embedded therein to provide a wear-resistant non-skid surface. However this product is relatively expensive and complex to manufacture. It is primarily intended for marinas or dock environments and does not have the attractive appearance of decking of the present invention. It is not particularly intended for garden environments or in similar environments where an aesthetically attractive appearance is very important. It also takes a very different approach from the present invention in that it relies upon embedded grit.

US Patent No 4,517,239 discloses a fibre-cement/plywood walking surface. The surface is formed of crushed limestone, volcanic ash and asbestos fibres. It is attached to a panel of plywood by several intermediate bonding layers of catalysed resin material. It is said to be particularly suitable for use with marine dock structures. It is similar therefore to

EP 0217989 A1 in that a relatively hard abrasive surface is present, which is not particularly aesthetically pleasing.

US 2002/0121064 A1 discloses a wood deck plank with protective cladding. The plank has a wood core formed by bonding a plurality of wood strips or chips together. The cladding has an exposed surface that is textured by an embossing technique. T-shaped connector clips are used to join together adjacent planks, the planks being provided with grooves in their sides for receiving the clips. This therefore takes a very different approach from the present invention and relies upon an embossing technique to texture a surface.

JP 07158236A discloses a method of repairing a balcony floor. Artificial turf is used as a cover that serves to absorb solar heat. Channels are located underneath the turf that act to dissipate heat absorbed by the turf. The system is said to prevent thermal deformation of flooring that might otherwise occur. This is again very different from the present invention, which does not require a complex system of internal channels to dissipate heat. Furthermore, the figures of JP 07158236A show a continuous upper layer of artificial turf and this is therefore a very different arrangements from the present invention where areas of the supporting material are deliberately exposed at the upper surface.

GB 2339437A discloses a wooden decking element with a non-slip insert located within a groove. The groove increases in width from its top to its base. The element may be formed by inserting adhesive or resin mixed with a non-slip material in a malleable or liquid state into the groove and then allowing it to set *in situ*. The anti-slip materials suggested are abrasive, rubber, rubber chips, stone chips or mixtures of these. Thus the approach taken is again very different to that of the present invention.

DE 29616983 U discloses synthetic grass in the form of a mat that is bonded to a floor plate made of pulverised recycled rubber. The floor plate may have a push fit connection with an adjoining plate. This is essentially a matting system that is very different in nature from decking. It is intended as an all weather surface for sports grounds and the like.

DE 19733286 provides a system according to the preamble of claim 1, with a stone and cement base having artificial present on top.

Thus the prior art products all rely upon very different approaches to that of the decking of the present invention.

The present invention represents a major breakthrough in that it provides the attractiveness of a lawn-like material whilst retaining the convenience, practicality and structural aspects of traditional decking. It is also very inexpensive to produce and significantly reduces the risk of slipping compared to standard decking.

As discussed above, the decking of the present invention utilises a relatively rigid support material that is wood, comprises wood, or has the appearance of wood.

The support material is desirably suitable for normal outdoor use in a climate such as the UK climate. It is preferred that it will last in such a climate for a period of at least 5 years at least 10 years, or at least 15 years without requiring replacement.

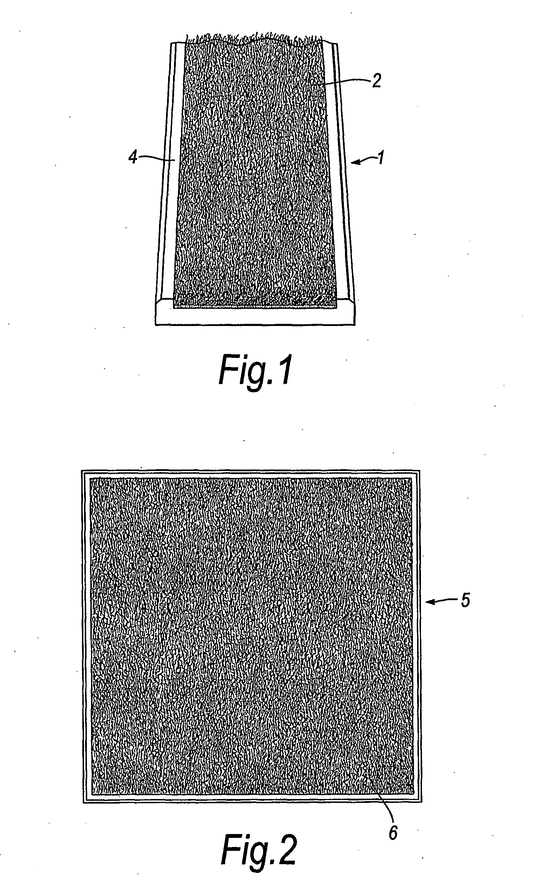

The decking preferably comprises a recess, with the artificial grass located within the recess. Thus the artificial grass is preferably inlaid. (See Figure 1, for example, as described later in greater detail.)

If the artificial grass is located within a recess it is preferred that majority of strands of grass extend above the height of the recess. Thus the top of the grass will be the highest part of the upper decking surface.

It is not however essential for the artificial grass to be present in a recess. It may simply be attached to a generally planar surface. The surface may even have a slight camber to assist in drainage to the sides, although this is less preferred.

Desirably the artificial grass is fixedly mounted to the support. For example it may be fixed in place using adhesive. Preferred adhesives are polyurethane based adhesives, as are well known in the art. Desirably the adhesive is water-soluble.

A range of such adhesives are sold by Evo-Stik under the trade mark of Evo-Sport^{™}. Evo-Sport 1068 ^{™} is particularly preferred. It can be obtained in a sealed cartridge and easily applied using a cartridge gun. It will cure to an initial degree within a few hours, with full curing (for practical purposes) normally occurring in less than 48 hours. As an alternative to using a cartridge gun, adhesive can be applied by any other appropriate means including brushing, using a roller, spraying, etc. It is also possible to use a tape coated with adhesive on both sides.

As an alternative to adhesive, any other appropriate means for fixing the artificial grass in place relative to the support can be used.

For example, mechanical fixing devices such as nails, screws, tacks, staples, ties, clamps, rivets, nuts and bolts, etc. may be used. If metal fixings are used they are desirably rust-resistant. For example they may be galvanised or may be formed of a rust resistant material (e.g. aluminium).

In a further alternative embodiment the artificial grass need not be fixedly mounted to the support but can be removably mounted. Many such systems are possible. For example, a releasable hook and eye system, such as a Velcro^{™} system may be used.

Another alternative is for a region of artificial grass (e.g. a strip) to be shaped so that is normally retained in a groove in the support but can be physically slid/pulled out of the groove when it is desired to replace it.

Thus, the groove may be narrower towards its top than towards its base and may therefore be shaped so that the artificial grass will not pass upwards through the groove during normal use. For example it may have a generally dove-tail shaped cross-section. Such a groove is shown in the figures of GB-2339437 for example (although it is used to receive a different material than the present invention and the material is poured into the groove and allowed to set *in situ*). Alternatively, the groove may have straight vertical sides for most of its depth but may have a slot that extends horizontally at its base its base and can be used for retaining a layer of material that is slid into position (i.e. the cross-section of the groove approximates to an inverted "T").

The present invention includes a method of producing decking according to the present invention comprising:
a) modifying existing wood decking, or existing decking that comprises wood or has the appearance of wood, by attaching one or more artificial grass strips hereto (e.g. wherein recesses for receiving the artificial grass strips are cut into the existing decking and artificial grass strips are inlaid into the recesses;
   or
b) placing a strip of artificial grass into a recess that is present in a piece of wood, or a material that comprises wood or has the appearance of wood, and optionally securing said strip thereto.

In this latter embodiment the recess can be shaped to retain the artificial grass in position.

Although artificial grass is often sold in a form in which it is on a flexible base, it is also possible to obtain it in on a rigid support. The present invention includes a piece of decking comprising artificial grass on a rigid support; wherein the rigid support bearing the artificial grass is present in a recess present in the decking. The rigid support allows the grass to be easily slid in and out of position, as desired. This can provide a useful releasable system.

Many alternative releasable systems are possible. These include releasable press-fit or click fit systems, releasable ties, releasable clamps, etc. Indeed screws can even be considered to be releasable, especially with the widespread use of powered screwdrivers.

Systems where the artificial grass is removably mounted are useful for when it is desired to remove the artificial grass without necessarily having to remove the support. This can occur, for example, if the artificial grass becomes damaged (e.g. due to cigarettes), discoloured or excessively worn and requires replacement, but the support remains in relatively good condition.

Whether or not the artificial grass is fixedly or removably mounted, it should still have the general appearance of grass, at least from a distance. Preferably it has the general appearance of grass when viewed from a distance of 20 metres. More preferably it still has the appearance of grass when viewed from a distance of 10 metres or 5 metres. Most preferably it still has the general appearance of grass when viewed by a person walking upon it.

The nature of the artificial grass can vary. However it will normally be in the form of elongate strands with the majority of the strands being at least 2 mm in length (measured from the top of a strand when extended to the base where the strand is fixed). More preferably the majority of the strands are at least 5 mm in length. For example majority of the strands may be above 10 mm in length or even above 15 mm in length. (There is no fixed upper limit, although for the majority of applications the grass will be less than 100 mm or less than 50 mm in length.)

Thus it is preferred that the artificial grass is not simply a flat material. It is therefore desirably not simply a piece of felt, a coloured sheet or a painted surface.

It should be noted that the term "strand" is used herein in a broad sense and covers elongate artificial grass forms of any nature. Thus it includes artificial grass leaves, grass stems, grass with seeds, grass flowers, or any combination of these. In some cases artificial weeds, moss and/or flowers may even be included amongst the artificial grass.

The artificial grass is preferably green. However other colours, shades or tones may be used. For example browns or yellows may be used to fit in with different environments (e.g. with arid environments) or with different seasons.

Indeed a range of several artificial grass colours may be provided so that the artificial grass can be replaced for different seasons. This can be easily done if the artificial grass is releasably mounted to the support.

Grass of different colours or shades may even be present within a given area so as to provide a more natural appearance. Thus some artificial grass strands may vary from neighbouring strands. A random arrangement of various different shades may be present and can result in a more natural appearance. It is even possible to provide different shades in different parts of an artificial grass strand. Thus a strand may be variegated, speckled, may have different shades for leaves and stem, etc.

Preferred artificial grass is in the form of a resilient plastics material suitable for outdoor use over many years. For example, polypropylene or polyethylene may be used.

Artificial grass is very well known in the art. Typically it comprises a plurality of strands attached to a flexible support, such as a rubber mat. Various ways of making artificial grass are discussed in US patent number 3,332,828, for example.

A wide range of different material can be used. Preferably the grass is formed of an extruded thermoplastic filamentous material. For example the material may be a polyamide (such as a nylon material), a polyester or a polypropylene. The grass may be in the form of a cut pile that extends from a woven base. It may be adhered or otherwise attached to a flexible backing material formed of a polymeric elastomer.

Many different types of artificial grass are known. Well known brands of artificial grass that are used in sports stadia include AstroTurf^{™}, FieldTurf^{™} and SportGrass ^{™}. These can all be incorporated into the present invention.

A wide variety of artificial grasses are available for garden use and again these can all be incoporated into decking of the present invention. For example, many types of artificial grass for gardens are available from Evergreens UK Ltd, of Market Overton, Oakham. A preferred type of artificial grass is known as "Garden" ^{™} and can be obtained from Lano of Belgium.

In some cases the artificial grass may be lubricated (e.g. with silicone). Artificial grass may even be partially in-filled with sand and/or with other particulate mater (e.g. rubber particles). This can assist in maintaining some artificial grasses in a generally upright manner. It can also aid in providing a springy surface, which is preferred for some sports application. It is not however essential to treat the grass in such a manner and in most cases no additive materials will be required.

In order to assist drainage the decking may be provided with a plurality of apertures. It may therefore be pre-drilled. These apertures may be provided in a recess used to receive regions of artificial grass and may extend through the support material. Thus the apertures may not be easily visible, ensuring the aesthetically attractive appearance of the product.

In order to reduce the risk of warping the support material may be provided with one or more longitudinal grooves. These may be provided in addition to any indentation in which the artificial grass is located. They can be formed by an automated cutter or router. They may alternatively be formed with hand tools.

Decking of the present invention (whether in the form of tiles, planks or pre-assembled units) is particularly suitable for external use. The present invention therefore includes within its scope a garden, patio or other external area comprising decking of the present invention. Thus it includes outdoor play areas, sports areas, recreation grounds, paths, bridges, picnic areas, areas adjacent swimming pools, ponds, or other areas of water, etc.

For many outdoor applications the decking will be intended as a support surface where people will walk, sit or play. However the nature of the decking is such that it has many other applications. For example it may be used for fencing, screens, panels, or other partitions.

It may even be used on a roof or on an external wall or door of a building so as to provide an attractive appearance. Thus roof decking and cladding are also within the scope of the present invention. Such decking allows buildings or features to blend in with the natural environment. The decking is particularly useful as an alternative to grassed roofs. Such roofs are difficult to construct, they can be very heavy, and they are particularly difficult to maintain. Decking of the present invention provides an elegant low cost, low maintenance alternative. It can be used on both flat roofs and angled roofs.

It can be used on other exposed parts of a building. For example it may be used on a balcony, step or sill.

The decking can even be used to make constructs. For example it may be used to form a box for outdoor use (e.g. as a container for tools, or compost), or it may be used to construct a shed. An article constructed using decking of the present invention is therefore also included within the scope of the invention.

Although the decking is primarily intended for outdoor use, it can be used internally and this is also within the scope of the present invention. For example the decking can be used to provide an attractive display area for use in retailing, at an exhibition, or at a conference. It is particularly useful for displaying products intended for outdoor use (e.g. plants, garden furniture, agricultural items, camping and hiking equipment, etc.), but can be used for any desired purpose. It can also be used in conservatories and greenhouses, on balconies or verandas, adjacent to static or mobile caravans), etc.

It is particularly useful in areas where natural grass will not grow properly (e.g. shaded areas, arid areas, etc.), or where it might become worn through heavy/intense use (e.g. pathways).

It can be used in tents to provide solid flooring as an alternative to grass or groundsheets. This is particularly useful where a firm surface is desired (e.g. for seating areas, tables, etc.). Tents may be used for hosting receptions exhibitions, shows, circuses, parties, wedding receptions, etc. and the decking of the present invention can be used for all these purposes.

The decking is particularly useful for outdoor drinking or eating areas such as beer gardens, areas outside pubs, cafeterias or restaurants, etc. Such areas are increasingly in demand by smokers in many countries following bans on smoking indoors. The decking of the present invention can provide a safe, level surface for such areas that has an attractive appearance and is easy to maintain. Preferably such decking is flame-resistant or retardant. (It may incorporate a flame-resistant or flame-retardant composition, or may be sprayed/coated with such a composition)

Thus decking of the present invention therefore has a very large number of uses.

Decking of the present invention can be sold in kits.

A preferred kit comprises a plurality of planks of decking of the present invention, or a plurality of units comprising said planks. The kit may be provided in a sealed container. It may include instructions for use.

It may also include additional components. For example, it may include one or more of the following components (including any desired combination thereof):
a) fixings and/or adhesive for;
b) a weed control barrier
c) one or more decking posts
d) one or more decking joists
e) damp proof material
f) edging/skirting material

As an alternative to decking planks, the kit may comprise decking tiles of the present invention. (See Figure 2, for example, as described later in greater detail.)

The term "tile" is used herein to cover structures that, unlike planks, are not elongate. They include squares, hexagons and other regular non-elongate shapes. When seen from above the tile preferably has a central region of artificial grass that is surrounded by material from which the support is formed (i.e. wood, material comprising wood, or material with the appearance of wood).

In a further embodiment a kit of the present invention may comprise artificial grass and the rigid support for said artificial grass as separate components. Here fixings or adhesive for joining together the grass and support may be provided. Alternatively, fixings or adhesive may not be needed, especially if the if the artificial grass is removably mounted (e.g. if it is simply slid in/out of position, as described earlier).

A plurality of different coloured or different shaded pieces of artificial grass may be provided in a kit. These can be used for different seasons or for different environmental conditions.

Thus a very wide range of different kits are possible and all are within the scope of the present invention.

The present invention will now be described by way of example only, with reference to the accompanying drawings, wherein:
Figure 1 shows a partial section of a decking plank of the present invention; wherein the plank has a recess in which artificial grass is present and is secured by adhesive
Figure 2 shows a square decking tile of the present invention having artificial grass in a central region.
Figure 3 shows a pre-assembled decking unit in which several decking planks of the present invention are joined together by three wooden rails located underneath. The unit is shown from below so that the rails can be seen.
Figure 4 shows a similar decking unit to that shown in Figure 3, but with additional rails provided so that there is a frame extending completely around the base of the decking unit.
Figure 5 shows the decking unit as shown in Figure 3 or Figure 4, but when viewed from above. For simplicity the artificial grass is not shown, but would be present in central longitudinal strips along each of the exposed planks (as for the decking plank shown in Figure 1).
Figure 6 shows a schematic cross-sectional view through a piece of decking of the present invention with artificial grass set in from edges of the support material.
Figure 7 shows in schematic form two profiles of support material for the artificial grass (in cross-section), where elongate grooves have been cut to reduce warping and/or to facilitate drainage.
Figure 8 shows various patterns that can be produced using decking of the present invention.
Figure 9 show a perspective view of decking area constructed using decking planks of the present invention.
Figure 10 shows a perspective view of decking area constructed using pre-assembled decking units of the present invention.
Figure 11 is similar to Figure 10, but shows pre-assembled decking units in an alternating arrangement, rather than all running in the same direction.

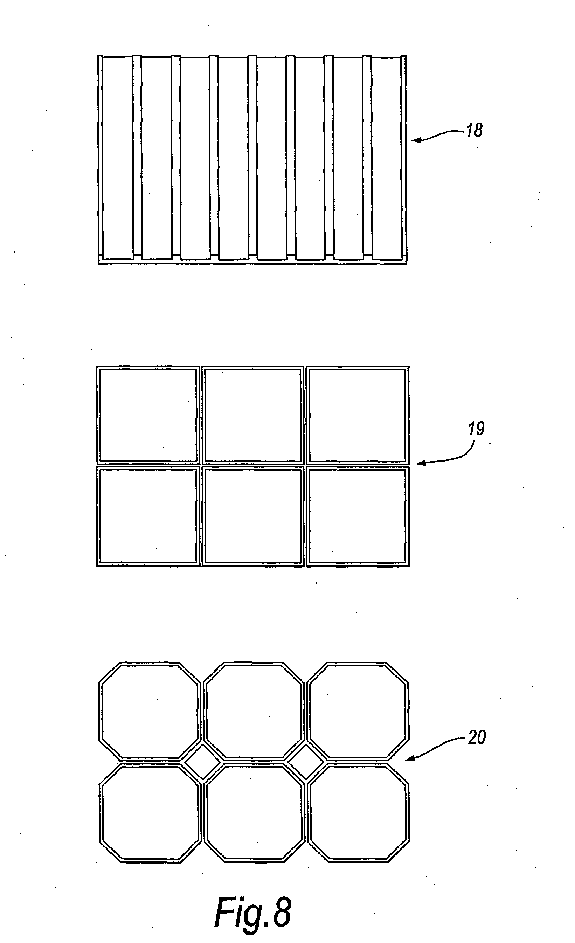

[For simplicity, the artificial grass is not shown in Figures 8 to 11, but would be present as central longitudinal strips of the decking planks or as central regions of the tiles.]

### Example 1

### Construction of a first decking plank of the present invention

Construction is very simple, which is part of the attraction of the present invention.

A plank of standard planar wooden decking is obtained and its width is measured. In this example the plank is formed of Swedish redwood pine that has been pressure treated and /or treated with preservative so as to be suitable for outdoor use for many years.

A piece of artificial grass is also obtained. This comprises grass tufts adhered to a flexible base. In this example the artificial grass used was obtained from Lano, Belgium under the trade mark of 'Garden'.

The piece of artificial grass is cut to shape to provide a rectangular strip that has the same length as the piece of decking board, but has a narrower width.

Adhesive is applied to a central region of the plank. The adhesive is obtained from Evostik under the trade mark of Evo-Sport 1068 ^{™} and is conveniently applied using a glue gun, brush or spatula.

The artificial grass is then placed on the decking board so that it lies over the adhesive coated area and, but leaves two parallel strips of decking board exposed at either side of the artificial grass (when viewed from above).

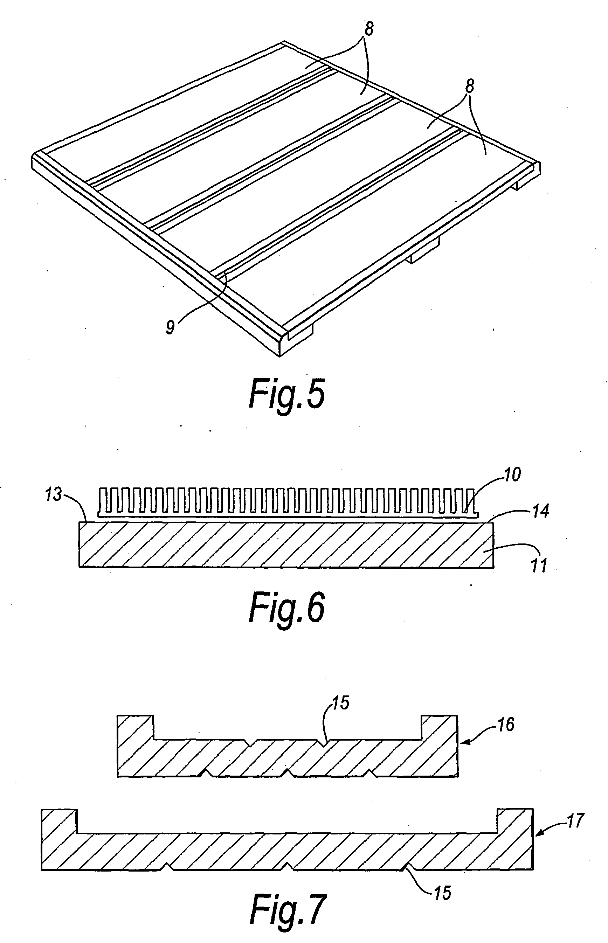

This is illustrated in the schematic cross-section shown in Figure 6.

Here an artificial grass strip 10 is secured to a lower decking board 11 by adhesive (not shown for simplicity). The artificial grass strip 10 is centrally located on the board 11 and leaves equal exposed strips 13, 14 of decking board surface at either side. The artificial grass strip 10 runs along the length of the upper surface of the decking board 11.

(It is also possible for the artificial grass strip to be cut to a length that is slightly shorter than the length of the plank and for it to be adhered to the wood in a central position so that is appears as an island of grass that is surrounded by exposed wood surfaces on all sides.)

In order to assist in accurately placing the artificial grass in position, the decking board may pre-marked to show where this should be done, although this is not essential and the artificial grass may simply be positioned by eye. The artificial grass can be gently pressed down to ensure good contact with the decking board. It can be weighted down or clamped if desired, although this is not normally required.

Excess adhesive can be removed by wiping it away with a soft absorbent material, such as a damp sponge or cloth. (This may also be used to smooth out ruffles in the artificial sheet grass.) Masking tape may even be used to protect certain areas from adhesive.

The product can be left indoors undisturbed on a level surface or rack for sufficient time for the adhesive to cure to a degree so that the artificial grass is firmly attached to the wood and is ready for use. The minimum curing time required will depend upon various factors such as the thickness of adhesive, humidity, etc.

Curing for any given adhesive can easily be tested by tugging a small piece of grass in an upward direction and seeing whether or not it easily comes away from the wood. (If desired, a small test sample may be used for this so it is not necessary to disturb decking intended for sale.)

Although the above procedure describes a process in which adhesive is placed onto the upper surface of the wood used for the decking board, adhesive can alternatively, or additionally, be placed on the lower surface of the artificial grass strip.

In a further alternative the adhesive may be provided on both sides of a piece of resilient tape and the tape may be stuck to the decking.

Once the adhesive has cured so that the artificial grass is firmly bonded to the wood, the plank of decking is ready for use. Of course in embodiments where adhesive is not used (e.g. where mechanical fixings are used instead) curing will not be needed and the production time can then be speeded up.

A decking plank of the present invention can be provided in any desired length. Standard size lengths may be provided. It is also possible to provide long planks that can be cut down to shorter lengths later on, if desired.

A decking plank of the present invention may be packed with other planks to provide a kit, or finished planks may be sold individually.

The procedure described above can be automated so as to increase throughput. Thus, for example, rollers may be used to bring the artificial grass and decking plank together, to apply adhesive and/or preservative, etc. Automated cutters may be used to cut the product to desired lengths.

[Although decking planks are preferred, many other shapes are of course possible. For example, as shown in Figure 2, square tiles 5 can be formed comprising artificial grass 6 in a central region. Such tiles can be laid adjacent to one another to provide a regular pattern 19, as shown in the arrangement illustrated in the middle of Figure 8. Other shaped tiles are possible and can also be laid in regular patterns. An arrangement of two or more different shaped tiles may be provided, as illustrated in the lower part of Figure 8.]

### Example 2

### Construction of the construction of a second decking plank of the present invention

As an alternative to the first decking plank of the present invention described in Example 1, a different decking plank (referred to herein as a second decking plank of the present invention) may be provided in which the artificial grass is located in a recess provided in the decking.

The procedure is generally the same as that described in Example 1 apart from the step of providing the standard piece of decking with a recess. This is easily achieved by sliding a piece of plank decking material though an automated cutter. The cutter has a cutting head that is profiled to provide a shape corresponding to the desired cross section of the recess.

In one embodiment the cutting head is arranged to cut a simple recess with straight walls that are at right angles to the upper surface of the decking plank. Thus this recess forms a generally rectangular groove.

Adhesive can be placed in the recess and the artificial grass can then simply be placed or pressed into position. Once the adhesive has cured the plank is ready to use.

As can be seen in Figure 1 the decking plank 1 has a neat, symmetrical appearance from above, with the artificial grass 2 appearing as a central strip of lawn extending the full length of the plank and the exposed side regions of wood 3, 4 appearing as smart edge areas.

As an alternative to using a cutting machine it is of course possible for a recess to be formed using standard carpentry techniques. Thus the recess may be chiselled out. However this is relatively time-consuming and can require skilled carpentry, depending upon the profile of the recess.

A further alternative is to lay strips of material on top of a piece of planar decking board so that the recess is then provided between the two strips. The material is preferably the same material as the decking board (preferably wood treated for exterior use). The strips may be secured together by any appropriate means (e.g. gluing, nailing, screwing etc.) and the groove is therefore formed without the need to cut into the base material. This alternative is however less preferred than cutting a recess into the decking board, because it is more time consuming, more costly and can result in reduced structural integrity.

In another embodiment a cutting head is arranged to cut a recess that is wider towards its base than at the top. It is well known in the art of wood-machining to use blades or routers with different profiles so that any desired cross-sectional shape can be cut. If desired, one or more lasers may be used to guide cutting. In this embodiment it is possible for the artificial grass to be slid into position and be retained in the recess by virtue of the shape of the recess (The artificial grass will therefore not come out of the top of the recess during normal use, although it can be pulled out, if desired). This is a useful embodiment if it is desired for the artificial grass to be removably mounted, because strips of artificial grass can simply be removed and replaced when desired (e.g. with wear, in order to match changing seasons, etc.) It is possible to close the ends of the recess with end pieces that may be screwed or otherwise mounted in position. If the end pieces can be easily removed (e.g. by unscrewing) then the artificial grass can again be easily replaced. The artificial grass may be provided as strips having a flexible backing. However if it is desired to slide them into position within a correspondingly shaped recess then it can be advantageous for the artificial grass to have a rigid backing. It is of course also possible to secure the artificial grass within the recess, e.g. with adhesive or with mechanical fixings. It can therefore be permanently bonded, if desired.

Recessed embodiments of the present invention are advantageous in that they hide the edges of artificial grass and therefore provide a more natural appearance, because the base material to which the artificial grass is secured is not easily visible.

The decking plank (of whatever nature) may be provided with one or more longitudinal grooves to reduce the risk of warping. Such grooves can be provided at the base of the recess of the decking and/or at the lower surface of the decking. The grooves may also assists in providing drainage channels for water.

Figure 7 shows two cross sections of decking planks that have such grooves 15. (The artificial grass is not shown for ease of illustration, but would of course be present in the finished article).

The upper cross section shown is an example of a decking plank 16 with both upper and lower longitudinal grooves in the support material.

The lower cross-section is an example of a decking plank 17 with lower longitudinal grooves only.

### Example 3

### Pre-assembly of a decking unit comprising a plurality of planks of the present invention

Decking planks 1 of the present invention can easily be assembled into decking units.

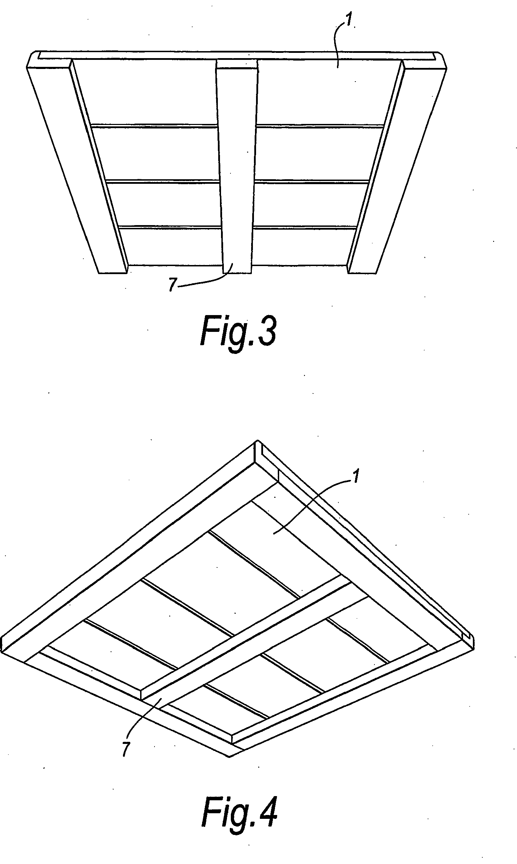

As shown in Figures 3 and 4, decking planks 1 can simply be nailed or otherwise secured to base planks 7 (sometimes known as "rails") to provide an integral unit. The base planks 7 will not normally be seen and can therefore be roughly cut planks of timber suitable for outdoor use. Sanding /planing of the base planks is therefore not required.

The decking planks 1 can be assembled into any desired shape. However they will normally be generally polygonal when viewed from above. Preferably they will be generally rectangular or generally square.

This is evident from Figure 5. For simplicity the artificial grass is not shown here, but it would be present in the central regions of the planks (labelled 8).

A gap of a few mm will normally be present between adjacent upper planks so as to aid drainage. However it is not essential to provide such a gap and water may simply run off the sides of a decking unit.

In order to provide decking units of desired shapes or dimensions decking planks of the present invention can be cut to size (if they are not already provided in a desired size). If planks are cut to size then it is desired to treat the ends with a suitable end-grain preservative, as is well known in the art.

In order to provide a neat finish, one or more sides of the decking unit may be covered. This can be done with plain or decorative timber, as is known in the art of decking. This is not only aesthetically attractive but can also be useful in providing further protection to the end grain of the timber. Preferably edging/skirting material used for covering the sides of the decking unit is formed of the same material as the support material (i.e. it is preferably wood, e.g. pine).

The pre-assembled units can be sold individually, or several units may be packaged together for sale as a kit. The kit may include decking nails, decking screws or other fixing material, edgings etc. It may further include instructions for assembly. The kit may also include an indication of the area that can be covered using the number of preassembled decking units supplied.

### Example 4

### Construction of a decking area using individual decking planks of the present invention for the decking platform

Attractive decking areas are simple to construct using decking planks of the present invention.

A piece of level ground is first selected and if necessary, weeds or turf is removed and the ground is levelled out. Individual decking planks are typically laid upon a sub-frame frame of joists. This allows the planks to be laid so that they are horizontal or at a slight angle sloping away from an area from where it is desired to drain water. For example the incline may slope away from a building if the decking is attached to or close to the building. Any incline is preferably less than 10°. More preferably it is less than 5°.

The joists can be laid directly on the ground or, more preferably, are laid over a weed control barrier (e.g. a membrane or sheet) that is typically also covered with a layer of aggregate or gravel.

If the ground is poorly drained then it is possible to provide one or more concrete pads to raise the decking slightly and then to lay the decking frame on top of these. If this is done then typically, a piece of damp-proof-material is cut to shape and is placed between the pads and the joists.

A more elevated deck can be provided by using vertical deck support posts set in concrete and attaching the joists to these. Again, a weed control barrier would normally be placed on the ground below the decking and covered with particulate material, such as gravel.

Once the sub-frame has been constructed decking boards may be laid across the frame. The boards may be laid in a variety of patterns. For example they may be laid at right angles to the joists, they may be laid diagonally or may be laid in a chevron pattern. In the case of standard sized decking boards laid at right angle to the joist the spacing between each joist is typically around 40 cm. In the case of diagonally laid boards and boards arranged in a chevron pattern the spacing is normally less than for boards laid at right angles to the joists. Typically the spacing is around 30 mm.

A spacing of a few mm will normally be left between individual decking planks to assist with drainage of rainwater. Spacers can be used provided to ensure a consistent spacing.

The spacing can assist with drainage of rainwater, although this is not essential. Holes can also be drilled to assist in drainage. Alternatively rainwater may simply run off the outer edges of the decking area.

The planks will normally be nailed, screwed or stapled into place. Rust-resistant fixings (e.g. galvanised fittings, deck screws, etc.) are preferred.

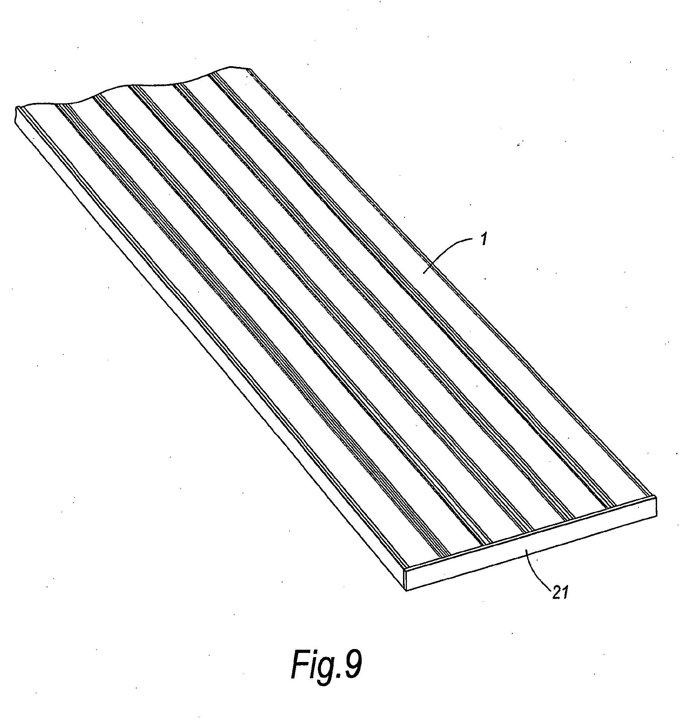

Figure 9 shows a partial perspective view of decking planks 1 of the present invention when laid out to provide a decking area. The planks 1 are laid at right angles to joists (not shown) that are present underneath the decking. Edging 21 is provided to hide the joists

Once constructed, the decking area is very easy to maintain. It can simply be periodically brushed, or hosed down, as desired.

The decking area can be used for any desired purpose. For example, it may be used as a walkway, as a support for garden furniture, as a display area for plants in containers, etc.

### Example 5

### Construction of a decking area using preassembled decking units comprising planks of the present invention

As an alternative to laying individual planks, pre-assembled decking units may be laid. These can provide different patterns from laying individual planks and are can be laid much more quicldy, especially if large preassembled units are used.

If desired, a sub-frame designed to support an appropriate size of pre-assembled unit can be constructed. This may for example consist of elongate struts that are interconnected by cross-members. The struts may be provided with rebates into which the units fit in place. The units are normally screwed, nailed or otherwise secured to the sub-frame.

It is also possible to lay decking tiles directly onto a level surface if the surface is sound (e.g. a pre-existing patio area). This can be achieved very simply and quickly. Indeed, only the external sections of a plurality of tiles need to be fixed. This can be done by thin strips of wood or metal nailed or screwed around the exterior joints. If the surface is solid (e.g. concrete, paving or pre-existing standard decking) then a weed control membrane will normally not be needed.

If a very small area is to be covered then it may be possible to use a single preassembled unit and place it appropriately. The weight of the unit will normally hold it in place. It may be placed on top of a weed control membrane or damp proof material as discussed previously, although this is not essential.

Once one or more units of the present invention have been laid as desired, the edges may be covered to provide an attractive finish. Typically this would be done with wooden skirting/edging.

The finished decking is highly attractive and can blend in with surrounding vegetation to a much greater degree than does standard decking. It also reduces the risk of slipping and is very easy to assemble compared to many other non-slip constructs used for walkways and the like.

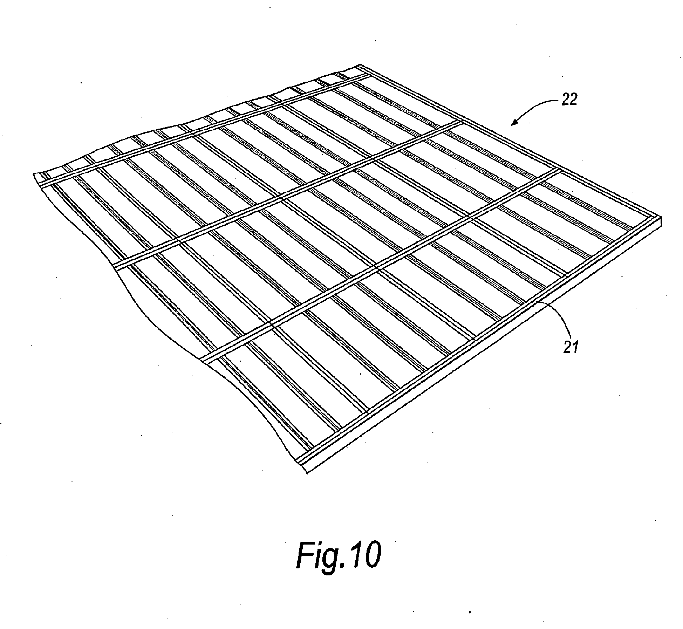

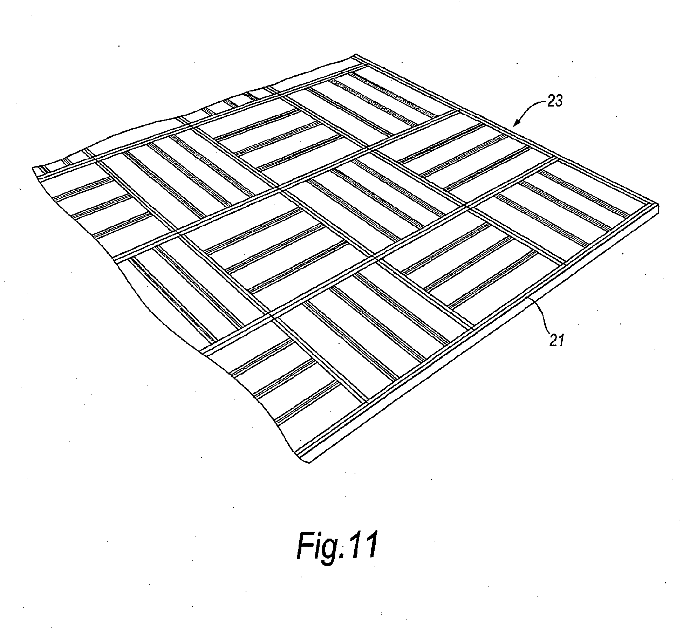

Figures 10 and 11 show two decking platforms that have been constructed using preassembled square decking units of the present invention.

The platform shown in Figure 10 has units laid out in an arrangement 22 in which decking planks in adjacent units are parallel to one another. This provides a regular appearance.

The platform shown in Figure 11 has units laid out in an arrangement 23 in which decking planks in adjacent units are at right angles to one another. This provides a chequered appearance.

As for Figure 9, edging 21 is also shown in Figures 10 and 11 and again provides a neat finish. However it is not essential to provide edging 21.

### Example 6

### Construction of an indoor decking area

If decking of the present invention is used indoors it will normally not be necessary to use weed control membrane or a damp-proof course. Furthermore a horizontal surface will generally be available so that it is not necessary to level out a surface or to construct a platform.

In many cases it may be desired to lay the decking to provide a temporary internal surface (e.g. for a temporary display area, for an event held over a limited period etc.) Here pre-assembled decking units may be laid in a desired pattern and held together by releasable fixings such as clips. Indeed the weight of the decking may hold it in place in many circumstances and it is not essential to use fixings.

It is also possible to lay the decking and then hold it in place with a temporary surround (e.g. skirting/edging). This may be screwed to the sides of the decking area and unscrewed when it is desired to remove the decking. Other temporary fixings may of course be used

As an alternative to laying pre-formed decking units, decking planks may also be laid. If these are intended to be removed after a short period they may be provided with easily releasable interconnecting parts so that they can be quickly assembled together and then quickly disassembled at a later stage. This is well known in the art of flooring (e.g. click-fit systems) and is a useful alternative to gluing planks together or nailing them down.

The decking (of whatever nature) may be laid on top of an underlay. This can for example be useful in reducing noise and may also be useful if a surface has slight uneven regions.

If desired, the underside of the decking or parts thereof may be provided with a material to reduce the risk of damage to an interior surface on which the decking is laid (e.g. an interior wooden floor). For example, rubber, cork or felt pads may be provided.

It is also possible to lay decking indoors for use over a long period, rather than just for temporary use. This may be laid using methods well known in the art for standard interior flooring. For example it may be screwed, nailed, glued or otherwise secured in place. Releasable fittings (e.g. click-fit systems for planks) may also be used, as discussed earlier.

If, as is usual, the decking is formed of wood, then gaps may be left to allow natural expansion and contraction. For example, a floating floor may be laid close to the edges of a room but a small gap may be left around its periphery may be left. Spacers can be used when laying the floor to ensure that sufficient gap is left for expansion.

Normally decking intended for prolonged interior use would be laid on op of an underlay, but this is not essential.

There are of course many alternative possibilities for laying decking, as is well known to those skilled in the art. All of these can be used for the present invention.

### Example 7

### Adapting an existing decking area to provide decking of the present invention.

Standard decking may already exits, but it may be desired to have it modified in order to provide more attractive decking of the present invention. The decking of the present invention is also useful in providing a surface that reduces the likelihood of accidental slipping/skidding.

One possibility for modifying existing decking is simply to lay decking of the present invention on top of the existing decking.

An alternative is to provide strips of artificial grass cut to size that can be attached to the upper surface of the existing decking e.g. using adhesive. If desired, central regions of decking planks may first be sanded down and or cleaned prior to applying adhesive

A further alternative is to use a router, chisel, or other cutting means to cut recesses in the existing decking and then to inlay artificial grass strips (e.g. using adhesive).

The above work can be performed on site without needing to remove the existing decking. If the weather is inclement then work may be performed under a temporary covering. This is particularly useful if an adhesive is used and it is desired to keep the decking dry whilst the adhesive cures

## Claims

1. Decking comprising artificial grass (10) and a rigid support (11)for said artificial grass; providing at least one exposed region (13, 14) on the upper surface of the decking **characterised in that** the material used for the rigid support (11) is wood, comprises wood or has the appearance of wood.

2. Decking according to claim 1; wherein said exposed region (13, 14) is an elongate region.

3. Decking according to claim 1 or claim 2; wherein the material used for the rigid support provides at least two elongate regions (13, 14) that are exposed on the upper surface of the decking; said elongate regions being substantially parallel, with artificial grass being located between the substantially parallel elongate regions.

4. Decking according to any preceding claim; wherein at said upper surface the artificial grass (6) is surrounded by material used for the rigid support (11).

5. Decking according to any preceding claim; wherein the support (11) has one or more longitudinal grooves (15) to reduce the risk of warping and/or wherein the support (11) has one or more apertures for drainage.

6. Decking according to any preceding claim that:
a) comprises at least one plank (11) or at least one tile (5); or
b) is in the form of a preassembled unit comprising a plurality of planks (11) (e.g. wherein the plurality of planks are secured to a base (7)).

7. A kit comprising artificial grass (10) and a rigid support (11) for said artificial grass (10) that is wood, comprises wood or has the appearance of wood; wherein said kit includes instructions for mounting the grass (10) to the support (11) so as to provide decking according to any of claims 1 to 6; said kit optionally also comprising fixings and/or adhesive for attaching the artificial grass (10) to the rigid support (11).

8. A method of forming a decking area comprising laying decking according to any of claims 1 to 6 upon a surface or frame and optionally securing the decking thereto.

9. A method of producing decking according to any of claims 1 to 6 comprising:
a) modifying existing wood decking, or existing decking that comprises wood or has the appearance of wood, by attaching one or more artificial grass strips (10)thereto (e.g. wherein recesses for receiving the artificial grass strips (10) are cut into the existing decking and artificial grass strips (10) are inlaid into the recesses);
or
b) placing a strip of artificial grass (10) into a recess that is present in a piece of wood, or a material that comprises wood or has the appearance of wood, and optionally securing said strip (10) thereto.

## Patentansprüche

1. Bodenbelag, umfassend Kunstrasen (10) und einen starren Träger (11) für den Kunstrasen, der mindestens einen freiliegenden Bereich (13, 14) auf der Oberseite des Bodenbelags bereitstellt, **dadurch gekennzeichnet, dass** das für den starren Träger (11) verwendete Material Holz ist, Holz umfasst oder wie Holz aussieht.

2. Bodenbelag nach Anspruch 1, wobei der freiliegende Bereich (13, 14) ein länglicher Bereich ist.

3. Bodenbelag nach Anspruch 1 oder 2, wobei das für den starren Träger verwendete Material mindestens zwei längliche Bereiche (13, 14) bereitstellt, die auf der Oberseite des Bodenbelags freiliegen; wobei sich die länglichen Bereiche im Wesentlichen parallel erstrecken, wobei Kunstrasen zwischen den im Wesentlichen parallelen länglichen Bereichen angeordnet ist.

4. Bodenbelag nach einem der vorhergehenden Ansprüche, wobei an der Oberseite der Kunstrasen (6) von für den starren Träger (11) verwendetem Material umgeben ist.

5. Bodenbelag nach einem der vorhergehenden Ansprüche, wobei der Träger (11) eine oder mehrere Längsnuten (15) aufweist, um die Gefahr eines Verziehens zu reduzieren, und/oder wobei der Träger (11) eine oder mehrere Öffnungen zur Dränage aufweist.

6. Bodenbelag nach einem vorhergehenden Anspruch, der
a) mindestens eine Planke (11) oder mindestens eine Platte (5) umfasst; oder
b) in Form einer vormontierten Einheit vorliegt, die mehrere Planken (11) umfasst (zum Beispiel wobei die mehreren Planken an einer Basis (7) befestigt sind).

7. Ausrüstung, umfassend Kunstrasen (10) und einen starren Träger (11) für den Kunstrasen (10), der Holz ist, Holz umfasst oder wie Holz aussieht; wobei die Ausrüstung Anweisungen zur Montage des Rasens (10) an dem Träger (11) enthält, um einen Bodenbelag nach einem der Ansprüche 1 bis 6 bereitzustellen; wobei die Ausrüstung wahlweise Befestigungselemente und/oder Klebstoff zur Befestigung des Kunstrasens (10) an dem starren Träger (11) umfasst

8. Verfahren zum Bilden eines Bodenbelagbereichs, umfassend Verlegen des Bodenbelags nach einem der Ansprüche 1 bis 6 auf einer Fläche oder auf einem Rahmen und wahlweise Befestigen des Bodenbelags daran.

9. Verfahren zum Herstellen eines Bodenbelags nach einem der Ansprüche 1 bis 6, umfassend:
a) Modifizieren eines bestehenden Holzbodenbelags oder bestehenden Bodenbelags, der Holz umfasst oder wie Holz aussieht, durch Befestigen eines oder mehrerer Kunstrasenstreifen (10) daran (zum Beispiel wobei Aussparungen zur Aufnahme der Kunstrasenstreifen (10) in den bestehenden Bodenbelag geschnitten werden oder Kunstrasenstreifen (10) in den Aussparungen eingelegt wird);
oder
b) Anordnen eines Streifens Kunstrasen (10) in einer Aussparung, die in einem Stück Holz oder einem Material, das Holz umfasst oder wie Holz aussieht, vorhanden ist, und wahlweises Befestigen des Streifens (10) daran.

## Revendications

1. Couverture comprenant une pelouse artificielle (10) et un support rigide (11) pour ladite pelouse artificielle, procurant au moins une région exposée (13, 14) sur la surface supérieure de la couverture, **caractérisée en ce que** le matériau utilisé pour le support rigide (11) est le bois, contient du bois ou a l'apparence du bois.

2. Couverture selon la revendication 1, dans laquelle ladite région exposée (13, 14) est une région allongée.

3. Couverture selon la revendication 1 ou la revendication 2, dans laquelle le matériau utilisé pour le support rigide fournit au moins deux régions allongées (13, 14) qui sont exposées sur la surface supérieure de la couverture; lesdites régions allongées étant sensiblement parallèles, la pelouse artificielle étant située entre les régions allongées sensiblement parallèles.

4. Couverture selon l'une quelconque des revendications précédentes, dans laquelle, à ladite surface supérieure, la pelouse artificielle (6) est entourée par le matériau utilisé pour le support rigide (11).

5. Couverture selon l'une quelconque des revendications précédentes, dans laquelle le support (11) comporte une ou plusieurs rainure(s) longitudinale(s) (15) destinée(s) à réduire le risque de gauchissement, et/ou dans laquelle le support (11) comporte une ou plusieurs ouverture(s) pour le drainage.

6. Couverture selon l'une quelconque des revendications précédentes, qui:
a) comprend au moins une planche (11) ou au moins un carreau (5); ou
b) se présente sous la forme d'une unité pré-assemblée comprenant une pluralité de planches (11) (par exemple, dans laquelle la pluralité de planches sont fixées à une base (7)).

7. Kit comprenant une pelouse artificielle (10) et un support rigide (11) pour ladite pelouse artificielle (10) qui est constitué de bois, qui contient du bois ou qui a l'apparence du bois, ledit kit comprenant des instructions pour monter la pelouse (10) sur le support (11) de manière à former une couverture selon l'une quelconque des revendications 1 à 6, et ledit kit comprenant aussi optionnellement des fixations et/ou un adhésif pour attacher la pelouse artificielle (10) sur le support rigide (11).

8. Procédé de formation d'une zone de couverture comprenant la pose d'une couverture selon l'une quelconque des revendications 1 à 6 sur une surface ou un cadre et optionnellement la fixation de la couverture à celle-ci/celui-ci.

9. Procédé de production d'une couverture selon l'une quelconque des revendications 1 à 6, comprenant les étapes suivantes:
a) modifier une couverture de bois existante, ou une couverture existante qui contient du bois ou qui a l'apparence du bois, en attachant une ou plusieurs bande(s) de pelouse artificielle (10) sur celle-ci (par exemple, dans lequel des évidements destinés à recevoir les bandes de pelouse artificielle (10) sont coupés dans la couverture existante et des bandes de pelouse artificielle (10) sont installées dans les évidements); ou
b) placer une bande de pelouse artificielle (10) dans un évidement qui est présent dans une pièce de bois, ou un matériau qui contient du bois ou qui a l'apparence du bois, et optionnellement y fixer ladite bande (10).
